# EUROPEAN PATENT APPLICATION

(11) **EP 4 787 163 A1**
(43) Date of publication of application: **05.08.2026**
(21) Application number: 25829315.8
(22) Date of filing: 28.02.2025
(51) Int. Cl.: G06F 9/50

(54) **MEMORY MANAGEMENT METHOD, ELECTRONIC DEVICE, AND COMPUTER-READABLE STORAGE MEDIUM**

(30) Priority: 19.06.2024 CN 202410799228
(71) Applicant: HUAWEI TECHNOLOGIES CO., LTD., Shenzhen 518129 (CN)
(72) Inventor: LIN, Haiming, Shenzhen, Guangdong 518129 (CN); WANG, Xiaoyuan, Shenzhen, Guangdong 518129 (CN); CHEN, Jie, Shenzhen, Guangdong 518129 (CN); JI, Kecheng, Shenzhen, Guangdong 518129 (CN); QIU, Ge, Shenzhen, Guangdong 518129 (CN); ZHOU, Weilai, Shenzhen, Guangdong 518129 (CN)
(74) Representative: Maiwald GmbH
(86) International application number: PCT/CN2025/080070
(87) International publication number: WO 2025/260823

(57) **Abstract**

This application is applicable to the field of terminal technologies, and in particular, relates to a memory management method, an electronic device, and a computer-readable storage medium. In the method, when detecting that a first application is switched to a background state, the electronic device may determine that the first application does not need to display an image and graphics rendering does not need to be performed on the first application, that is, may determine that the first application currently does not need to use a GPU physical memory. In this case, the electronic device may save, to a disk, first content stored in a first GPU physical memory corresponding to the first application, and may release the first GPU physical memory, to reduce occupation of the GPU physical memory, increase remaining available physical memories of the electronic device, improve a response speed of the electronic device to a user operation, improve smoothness of a system, and improve user experience.

## Description

This application claims priority to Chinese Patent Application No. 202410799228.5, filed with the China National Intellectual Property Administration on June 19, 2024 and entitled "MEMORY MANAGEMENT METHOD, ELECTRONIC DEVICE, AND COMPUTER-READABLE STORAGE MEDIUM", which is incorporated herein by reference in its entirety.

### TECHNICAL FIELD

This application belongs to the field of terminal technologies, and in particular, relates to a memory management method, an electronic device, and a computer-readable storage medium.

### BACKGROUND

An electronic device, for example, a mobile phone or a tablet computer usually includes a graphics processing unit (graphics processing unit, GPU). The GPU may be configured to perform graphics rendering, for example, configured to render an image that needs to be displayed by an application. When graphics rendering is performed by the GPU on the application, data related to graphics rendering may be stored in a physical memory (that is, a GPU physical memory or a GPU memory) corresponding to the GPU. When the application enters a background, the GPU physical memory occupied by the application is not released. As a quantity of applications on which graphics rendering is performed in the electronic device increases, the GPU physical memory is occupied increasingly. Consequently, remaining available physical memories of the electronic device become less, the electronic device responds to a user operation more slowly, and user experience is affected.

### SUMMARY

Embodiments of this application provide a memory management method, an electronic device, and a computer-readable storage medium, to reduce occupation of a GPU physical memory, increase remaining available physical memories of the electronic device, improve a response speed of the electronic device to a user operation, improve smoothness of a system, and improve user experience.

According to a first aspect, an embodiment of this application provides a memory management method, where the method may include:
when it is detected that a first application is switched to a background state, saving, to a disk, first content stored in a first GPU physical memory corresponding to the first application; and
releasing the first GPU physical memory.

In the memory management method provided above, when detecting that the first application is switched to the background state, the electronic device may determine that the first application does not need to display an image and graphics rendering does not need to be performed on the first application, that is, may determine that the first application currently does not need to use the GPU physical memory. In this case, the electronic device may save, to the disk, the first content stored in the first GPU physical memory corresponding to the first application, and may release the first GPU physical memory, to reduce occupation of the GPU physical memory, increase remaining available physical memories of the electronic device, improve a response speed of the electronic device to a user operation, improve smoothness of a system, and improve user experience.

In some embodiments, saving, to the disk, the first content stored in the first GPU physical memory corresponding to the first application may include:
obtaining virtual address space corresponding to the first application;
determining, based on the virtual address space, the first GPU physical memory corresponding to the first application; and
obtaining the first content stored in the first GPU physical memory, and saving the first content to the disk.

It should be understood that, for an application that is started to run in the electronic device, an operating system of the electronic device may allocate corresponding virtual address space to the application. When the application is an application on which graphics rendering needs to be performed, the GPU in the electronic device may obtain and save virtual address space corresponding to the application. In other words, for an application on which graphics rendering needs to be performed, when the application runs, the GPU may store a correspondence between the application and virtual address space corresponding to the application.

In the memory management method provided in this embodiment, when it is determined that the first application is switched to the background state, the GPU in the electronic device may determine, based on the correspondence, the virtual address space corresponding to the first application, and may determine, based on the virtual address space corresponding to the first application, the first GPU physical memory corresponding to the first application, so that the first content stored in the first GPU physical memory may be obtained, and the first content may be saved to the disk, to release the first GPU physical memory.

In an example, the virtual address space includes at least one virtual address, and each virtual address corresponds to one virtual page.

Determining, based on the virtual address space, the first GPU physical memory corresponding to the first application may include:
determining, based on the virtual page corresponding to the virtual address and a first GPU page table, a first physical page corresponding to the first application, where a mapping relationship between a virtual page and a first physical page is stored in the first GPU page table; and the first GPU physical memory includes at least one first physical page.

It should be noted that the virtual address space may include at least one virtual address. Generally, the virtual address space may include a plurality of virtual addresses. The virtual address may include a virtual page number and a virtual page offset. In other words, the virtual address space may be divided into a plurality of virtual pages of a fixed size. Each virtual page may have a corresponding virtual address. In other words, each virtual address may point to a corresponding virtual page.

Similarly, the physical address space (for example, the GPU physical memory) may include at least one physical address. Generally, the GPU physical memory may include a plurality of physical addresses. The physical address may include a physical page number and a physical page offset. In other words, the GPU physical memory may be divided into a plurality of GPU physical pages (or physical pages) of a fixed size. Each physical page may have a corresponding physical address. In other words, each physical address may point to a corresponding physical page.

A size of the physical page is usually the same as a size of the virtual page.

For a running application on which graphics rendering needs to be performed, the GPU may maintain a GPU page table corresponding to the application, and the GPU page table may include a mapping relationship between a virtual page and a physical page that correspond to the application. In other words, for the running first application, the first GPU physical memory corresponding to the first application may be divided into a plurality of physical pages (that is, first physical pages) of a fixed size. The GPU may save a first GPU page table corresponding to the first application, and the first GPU page table may include a mapping relationship between a virtual page and a first physical page that correspond to the first application.

In the memory management method provided in this example, after determining the virtual address space corresponding to the first application, that is, after determining each virtual address corresponding to the first application, the GPU in the electronic device may determine, based on each virtual address and the first GPU page table that corresponds to the first application, physical pages (that is, the first physical pages) corresponding to all the virtual addresses, that is, determine the first GPU physical memory corresponding to the first application.

For example, obtaining the first content stored in the first GPU physical memory, and saving the first content to the disk may include:
obtaining the first content stored on each first physical page, and saving, to the disk, the first content stored in each first physical page.

It should be understood that the content stored in the first GPU physical memory may be content stored in all first physical pages included in the first GPU physical memory. Therefore, when it is determined that the first application is switched to the background state, the GPU in the electronic device may obtain the first content stored in all the first physical pages, and may save, to the disk, the first content stored in all the first physical pages, to release the first GPU physical memory (that is, all the first physical pages).

In some embodiments, the method may further include:
recording a correspondence between the first content and a virtual page based on the first GPU page table and the first physical page that corresponds to each piece of first content.

In the memory management method provided in this embodiment, when saving, to the disk, the first content stored on each first physical page, the GPU in the electronic device may record, based on a mapping relationship (that is, the first GPU page table corresponding to the first application) between each first physical page and a virtual page, a correspondence between each piece of first content and a virtual page. After rebuilding a second GPU physical memory corresponding to the first application, the GPU in the electronic device may obtain each piece of first content from the disk, and may fill a second physical page in the second GPU physical memory with each piece of first content. Subsequently, the GPU in the electronic device may establish a mapping relationship between a virtual page and a second physical page based on the first content filled in each second physical page and the correspondence between the first content and the virtual page, to rebuild a GPU page table corresponding to the first application, so that when the first application is switched to the foreground state, the virtual address of the first application may be mapped to a correct physical page based on the rebuilt GPU page table without modifying the virtual address of the first application. In this way, the first application can normally access the GPU physical memory, and the first application can be normally used, that is, the first application can correctly display an image.

In some other embodiments, the method may further include:
releasing the first GPU page table.

In the memory management method provided in this embodiment, when it is determined that the first application is switched to the background state, and the first GPU physical memory corresponding to the first application is released, the first GPU page table corresponding to the first application may be further released. This can avoid incorrect mapping between a virtual page and a physical page that correspond to the first application.

In a possible implementation, the first GPU physical memory may include all GPU physical memories occupied by the first application, or may include a part of GPU physical memories occupied by the first application.

It should be understood that the part of GPU physical memories occupied by the first application may be a large texture memory occupied by the first application, or the like.

In some embodiments, the method may further include:
when it is detected that the first application is switched to a foreground state, reallocate a second GPU physical memory to the first application.

In the memory management method provided in this embodiment, when the electronic device detects that the first application is switched to the foreground state, the GPU in the electronic device may reallocate the second GPU physical memory to the first application, so that the first application can normally access the GPU physical memory, and can be normally used.

In an example, reallocating the second GPU physical memory to the first application may include:
determining a size of the second GPU physical memory; and
reallocating the second GPU physical memory to the first application based on the size of the second GPU physical memory.

In the memory management method provided in this example, when the second GPU physical memory is reallocated to the first application, the size of the second GPU physical memory may be first determined, and the second GPU physical memory may be accurately allocated to the first application based on the size of the second GPU physical memory.

In a possible implementation, determining the size of the second GPU physical memory may include:
determining a size of a memory occupied by the first content, and determining the size of the second GPU physical memory based on the size of the memory occupied by the first content.

In the memory management method provided in this implementation, when saving, to the disk, the first content stored in the first GPU physical memory, the GPU in the electronic device may record the size of the memory occupied by the first content. Therefore, when reallocating the second GPU physical memory to the first application, the GPU in the electronic device may quickly and accurately determine the size of the second GPU physical memory based on the size of the memory occupied by the first content.

Alternatively, when reallocating the second GPU physical memory to the first application, the GPU may read the first content that corresponds to the first application and that is saved to the disk, and may determine the size of the memory occupied by the first content, to determine the size of the second GPU physical memory based on the size of the memory occupied by the first content.

In another possible implementation, determining the size of the second GPU physical memory may include:
determining a size of the first GPU physical memory, and determining the size of the second GPU physical memory based on the size of the first GPU physical memory.

In the memory management method provided in this implementation, when releasing the first GPU physical memory, the GPU in the electronic device may record the size of the first GPU physical memory, and may accurately determine the size of the second GPU physical memory based on the size of the first GPU physical memory.

In some embodiments, after reallocating the second GPU physical memory to the first application, the method may further include:
obtaining the first content from the disk, and filling the second GPU physical memory with the first content.

In the memory management method provided in this embodiment, after the second GPU physical memory is reallocated to the first application, the GPU in the electronic device may obtain the previously saved first content from the disk, and may fill the second GPU physical memory with the first content, so that the first application can correctly access the GPU physical memory, and the first application can be normally used.

In an example, the second GPU physical memory includes at least one second physical page.

Obtaining the first content from the disk, and filling the second GPU physical memory with the first content may include:
obtaining the first content from the disk, and filling the second physical page included in the second GPU physical memory with the first content.

In another example, the method may further include:
determining a virtual page corresponding to the first content; and
building a second GPU page table based on the virtual page corresponding to the first content and a second physical page corresponding to the first content, where a mapping relationship between the second physical page and the virtual page is stored the second GPU page table, and the second physical page corresponding to the first content is a second physical page filled with the first content.

For example, determining the virtual page corresponding to the first content may include:
determining, based on the correspondence between the first content and the virtual page, the virtual page corresponding to the first content.

In the memory management method provided in this example, when saving, to the disk, the first content stored on each first physical page, the GPU in the electronic device may record, based on a mapping relationship (that is, the first GPU page table corresponding to the first application) between each first physical page and a virtual page, a correspondence between each piece of first content and a virtual page. Therefore, after rebuilding a second GPU physical memory corresponding to the first application, the GPU may obtain each piece of first content from the disk, and may fill the second physical page in the second GPU physical memory with each piece of first content. Subsequently, the GPU may establish a mapping relationship between a virtual page and a second physical page based on the first content filled in each second physical page and the correspondence between the first content and the virtual page, to rebuild a second GPU page table corresponding to the first application, so that when the first application is switched to the foreground state, the virtual address of the first application may be mapped to a correct physical page based on the rebuilt second GPU page table without modifying the virtual address of the first application. In this way, the first application can normally access the GPU physical memory, and the first application can be normally used, that is, the first application can correctly display an image.

In a possible implementation, the mapping relationship between the virtual page and the physical page that correspond to the first application may be sequential mapping. To be specific, the first virtual page may be mapped to the first physical page, the second virtual page may be mapped to the second physical page, the third virtual page may be mapped to the third physical page, and the like. When saving, to the disk, the first content stored on each first physical page, the GPU may record a storage location of each piece of first content in the first GPU physical memory, that is, may record a physical page, in the first GPU physical memory, to which each piece of first content belongs. Therefore, after rebuilding the second GPU physical memory corresponding to the first application, the GPU may fill, based on the storage location of each piece of first content in the first GPU physical memory, a second physical page at a corresponding location in the second GPU physical memory with each piece of first content. Subsequently, the GPU may establish the mapping relationship between the virtual page and the second physical page based on the sequential mapping to rebuild the second GPU page table corresponding to the first application, so that when the first application is switched to the foreground state, the virtual address of the first application may be mapped to a correct physical page based on the rebuilt second GPU page table without modifying the virtual address of the first application. In this way, the first application can normally access the GPU physical memory, and the first application can be normally used, that is, the first application can correctly display an image.

According to a second aspect, an embodiment of this application provides a memory management apparatus, where the apparatus may include:
a content saving module, configured to: when it is detected that a first application is switched to a background state, saving, to a disk, first content stored in a first GPU physical memory corresponding to the first application; and
a memory releasing module, configured to release the first GPU physical memory.

In some embodiments, the content saving module is specifically configured to: obtain virtual address space corresponding to the first application; determine, based on the virtual address space, the first GPU physical memory corresponding to the first application; and obtain the first content stored in the first GPU physical memory, and save the first content to the disk.

In an example, the virtual address space includes at least one virtual address, and each virtual address corresponds to one virtual page.

The content saving module is further configured to determine, based on the virtual page corresponding to the virtual address and a first GPU page table, a first physical page corresponding to the first application, where a mapping relationship between a virtual page and a first physical page is stored in the first GPU page table; and the first GPU physical memory includes at least one first physical page.

For example, the content saving module is further configured to: obtain the first content stored on each first physical page, and save, to the disk, the first content stored in each first physical page.

In some embodiments, the apparatus may further include:
a relationship recording module, configured to record a correspondence between the first content and a virtual page based on the first GPU page table and the first physical page that corresponds to each piece of first content.

In some other embodiments, the apparatus may further include:
a page table releasing module, configured to release the first GPU page table.

In a possible implementation, the first GPU physical memory may include all GPU physical memories occupied by the first application, or may include a part of GPU physical memories occupied by the first application.

In some embodiments, the apparatus may further include:
a memory allocation module, configured to: when it is detected that the first application is switched to a foreground state, reallocate a second GPU physical memory to the first application.

In an example, the memory allocation module is specifically configured to: determine a size of the second GPU physical memory; and reallocate the second GPU physical memory to the first application based on the size of the second GPU physical memory.

In a possible implementation, the memory allocation module is further configured to: determine a size of a memory occupied by the first content, and determine the size of the second GPU physical memory based on the size of the memory occupied by the first content.

In another possible implementation, the memory allocation module is further configured to: determine a size of the first GPU physical memory, and determine the size of the second GPU physical memory based on the size of the first GPU physical memory.

In some embodiments, the apparatus may further include:
a content filling module, configured to: obtain the first content from the disk, and fill the second GPU physical memory with the first content.

In an example, the second GPU physical memory includes at least one second physical page.

The content filling module is specifically configured to: obtain the first content from the disk, and fill the second physical page included in the second GPU physical memory with the first content.

In an example, the apparatus may further include:
a virtual page determining module, configured to determine a virtual page corresponding to the first content; and
a page table building module, configured to build a second GPU page table based on the virtual page corresponding to the first content and a second physical page corresponding to the first content, where a mapping relationship between the second physical page and the virtual page is stored the second GPU page table, and the second physical page corresponding to the first content is a second physical page filled with the first content.

For example, the virtual page determining module is specifically configured to determine, based on the correspondence between the first content and the virtual page, the virtual page corresponding to the first content.

According to a third aspect, an embodiment of this application provides an electronic device, including a storage, a processor, and a computer program that is stored in the storage and that can be run on the processor. When the computer program is executed by the processor, the electronic device is enabled to implement the memory management method according to any one of the implementations of the first aspect.

According to a fourth aspect, an embodiment of this application provides a computer-readable storage medium. The computer-readable storage medium stores a computer program. When the computer program is executed by a computer, the computer is enabled to implement the memory management method according to any one of the implementations of the first aspect.

According to a fifth aspect, an embodiment of this application provides a computer program product. When the computer program product runs on an electronic device, the electronic device is enabled to perform the memory management method according to any one of the first aspect.

It should be understood that, for beneficial effect of the second aspect to the fifth aspect, refer to related descriptions in the first aspect. Details are not described herein again.

### BRIEF DESCRIPTION OF DRAWINGS

FIG. 1 is a diagram of graphics rendering performed by a GPU;
FIG. 2 is a diagram of a structure of an electronic device to which a memory management method is applicable according to an embodiment of this application;
FIG. 3 is a diagram of a software architecture to which a memory management method is applicable according to an embodiment of this application;
FIG. 4 is a schematic flowchart of a memory management method according to an embodiment of this application;
FIG. 5 is a diagram of releasing a part of GPU physical memories according to an embodiment of this application;
FIG. 6 is a diagram of releasing a GPU physical memory and rebuilding a GPU physical memory according to an embodiment of this application;
FIG. 7 is a schematic flowchart of a method for releasing a GPU physical memory according to an embodiment of this application; and
FIG. 8 is a schematic flowchart of rebuilding a GPU physical memory according to an embodiment of this application.

### DESCRIPTION OF EMBODIMENTS

It should be understood that the term "include" when used in the specification of this application and the appended claims indicates the presence of the described features, wholes, steps, operations, elements, and/or components, but does not preclude the presence or addition of one or more other features, wholes, steps, operations, elements, components, and/or collections thereof.

It should be further understood that the term "and/or" used in the specification and the appended claims of this application refers to any combination of one or more of associated items that are listed and all possible combinations, and includes these combinations.

As used in the specification and the appended claims of this application, the term "if" may be interpreted as "when", "once", "in response to determining", "in response to detecting" depending on the context. Similarly, the phrase "if it is determined" or "if [the condition or event] is detected" may be interpreted as "once it is determined", "in response to determining", "once [the condition or event] is detected", or "in response to detecting [the condition or event]" depending on the context.

In addition, in the descriptions of the specification and the appended claims of this application, the terms "first", "second", "third", and the like are merely intended for differentiated description, but cannot be understood as an indication or an implication of relative importance.

Reference to "one embodiment" or "some embodiments" described in the specification of this application means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and variants thereof all mean "include but are not limited to", unless otherwise specifically emphasized in another manner.

In addition, "a plurality of" mentioned in embodiments of this application should be interpreted as two or more.

Steps in a memory management method provided in embodiments of this application are only examples. Not all steps are mandatory, or not all content in each piece of information or each message is mandatory. The steps or the content may be added or reduced as required in a use process. A same step or a step or a message having a same function in embodiments of this application may be mutually referenced in different embodiments.

A service scenario described in embodiments of this application is intended to describe the technical solutions in embodiments of this application more clearly, and does not constitute a limitation on the technical solutions provided in embodiments of this application. A person of ordinary skill in the art may learn that, with evolution of network architectures and emergence of new service scenarios, the technical solutions provided in embodiments of this application are also applicable to similar technical problems.

An electronic device, for example, a mobile phone or a tablet computer may generally include a GPU. The GPU may be configured to perform graphics rendering, for example, may be configured to render an image that needs to be displayed by an application. When graphics rendering is performed by the GPU on an application, data related to graphics rendering may be stored in a GPU physical memory.

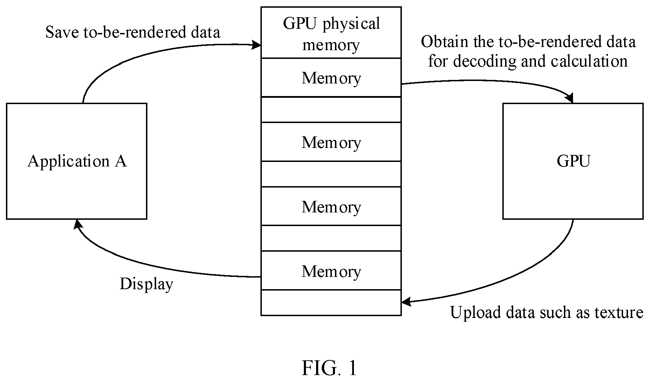

For example, FIG. 1 is a diagram of graphics rendering performed by the GPU.

As shown in FIG. 1, when an application (for example, an application A) installed in the electronic device needs to display an image, the application A may send to-be-rendered data corresponding to the image to the GPU, for example, may send to-be-rendered data such as a picture, a font, or a coordinate point to the GPU. The GPU may apply for using a part of physical memories of the electronic device as the GPU physical memory corresponding to the application A, and after obtaining to-be-rendered data corresponding to the image, may save, to a GPU physical memory corresponding to the application A, the to-be-rendered data corresponding to the image.

When the GPU renders the image, the GPU may obtain, from the GPU physical memory corresponding to the application A, the to-be-rendered data corresponding to the image. Subsequently, the GPU may decode and calculate the to-be-rendered data corresponding to the image, and may save, to the GPU physical memory corresponding to the application A, decoded and calculated data such as texture. Finally, the electronic device may send processed data such as texture to a display module (for example, a display) to display the image, so that the application A displays the image.

When the application A enters a background, the GPU physical memory occupied by the application A is not released. As a quantity of applications on which graphics rendering is performed in the electronic device increases, the GPU physical memory is occupied increasingly. Consequently, remaining available physical memories of the electronic device become less, the electronic device responds to a user operation more slowly, and user experience is affected.

To resolve the foregoing problem, embodiments of this application provide a memory management method, an electronic device, and a computer-readable storage medium. In the method, when detecting that a first application is switched to a background state, the electronic device may determine that the first application does not need to display an image and graphics rendering does not need to be performed on the first application. In other words, the GPU physical memory does not need to be used currently. In this case, the electronic device may determine the first GPU physical memory corresponding to the first application, and may obtain the first content stored in the first GPU physical memory. Subsequently, the electronic device may save the first content to a disk, and may release the first GPU physical memory, to reduce occupation of the GPU physical memory, increase remaining available physical memories of the electronic device, improve a response speed of the electronic device to a user operation, improve smoothness of a system, and improve user experience.

In embodiments of this application, the electronic device may be an electronic device that may include a GPU, for example, a mobile phone, a tablet computer, a wearable device, a vehicle-mounted device, a notebook computer, or a desktop computer. A specific type of the electronic device is not limited in embodiments of this application.

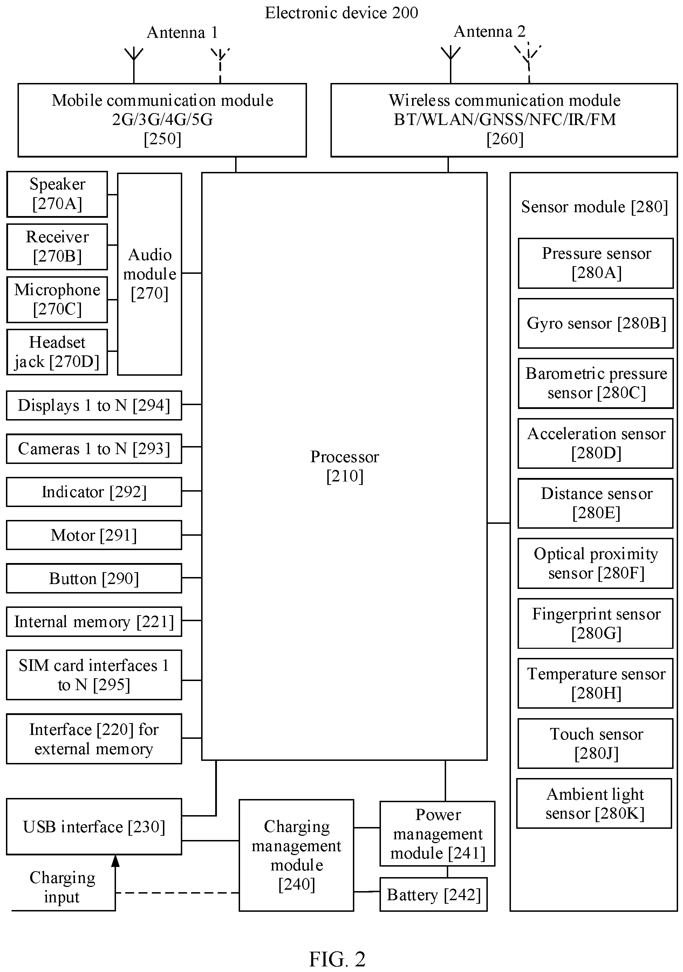

The following first describes an electronic device in embodiments of this application. FIG. 2 is a diagram of a structure of an electronic device 200.

The electronic device 200 may include a processor 210, an interface 220 for external memory, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, a subscriber identity module (subscriber identity module, SIM) card interface 295, and the like. The sensor module 280 may include a pressure sensor 280A, a gyro sensor 280B, a barometric pressure sensor 280C, an acceleration sensor 280D, a distance sensor 280E, an optical proximity sensor 280F, a fingerprint sensor 280G, and a temperature sensor 280H, a touch sensor 280J, an ambient light sensor 280K, and the like.

It may be understood that the structure shown in embodiments of this application does not constitute a specific limitation on the electronic device 200. In some other embodiments of this application, the electronic device 200 may include more or fewer components than those shown in the figure, or combine some components, or split some components, or have different component arrangements. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU), and the like. Different processing units may be independent devices, or may be integrated into one or more processors.

The controller may generate an operation control signal based on an instruction operation code and a time sequence signal, to complete control of instruction fetching and instruction execution.

A storage may be further disposed in the processor 210, and is configured to store instructions and data. In some embodiments, the storage in the processor 210 is a cache. The storage may store instructions or data just used or cyclically used by the processor 210. If the processor 210 needs to use the instructions or the data again, the processor may directly invoke the instructions or the data from the storage. This avoids repeated access and reduces waiting time of the processor 210, thereby improving system efficiency.

In some embodiments, the processor 210 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It can be understood that an interface connection relationship between modules illustrated in embodiments of this application is merely an illustrative description, and does not constitute a limitation on a structure of the electronic device 200. In some other embodiments of this application, the electronic device 200 may alternatively use an interface connection manner different from that in the foregoing embodiment, or a combination of a plurality of interface connection manners.

The charging management module 240 is configured to receive a charging input from a charger.

The power management module 241 is configured to connect to the battery 242, the charging management module 240, and the processor 210. The power management module 241 receives an input from the battery 242 and/or the charging management module 240, and supplies power to the processor 210, the internal memory 221, the display 294, the camera 293, the wireless communication module 260, and the like.

A wireless communication function of the electronic device 200 may be implemented through the antenna 1, the antenna 2, the mobile communication module 250, the wireless communication module 260, the modem processor, the baseband processor, and the like.

The antenna 1 and the antenna 2 are configured to transmit and receive an electromagnetic wave signal. Each antenna in the electronic device 200 may be configured to cover one or more communication frequency bands.

The mobile communication module 250 may provide a wireless communication solution that is applied to the electronic device 200 and that includes a 2G/3G/4G/5G or the like. The mobile communication module 250 may include at least one filter, a switch, a power amplifier, a low noise amplifier (low noise amplifier, LNA), and the like. The mobile communication module 250 may receive an electromagnetic wave through the antenna 1, perform processing such as filtering or amplification on the received electromagnetic wave, and transmit a processed electromagnetic wave to the modem processor for demodulation. The mobile communication module 250 may further amplify a signal modulated by the modem processor, and convert an amplified signal into an electromagnetic wave for radiation through the antenna 1. In some embodiments, at least some functional modules in the mobile communication module 250 may be disposed in the processor 210. In some embodiments, at least some functional modules in the mobile communication module 250 may be disposed in a same device as at least some modules in the processor 210.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal via an audio device (which is not limited to the speaker 270A, the receiver 270B, and the like), or displays an image or a video through the display 294. In some embodiments, the modem processor may be an independent device. In some other embodiments, the modem processor may be independent of the processor 210, and is disposed in a same device as the mobile communication module 250 or another functional module.

The wireless communication module 260 may provide a wireless communication solution that is applied to the electronic device 200 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 260 may be one or more devices integrating at least one communication processing module. The wireless communication module 260 receives an electromagnetic wave through the antenna 2, performs frequency modulation and filter processing on the electromagnetic wave signal, and sends a processed signal to the processor 210. The wireless communication module 260 may further receive a to-be-sent signal from the processor 210, perform frequency modulation and amplification on the signal, and convert the signal into an electromagnetic wave for radiation through the antenna 2.

In some embodiments, the antenna 1 and the mobile communication module 250 in the electronic device 200 are coupled, and the antenna 2 and the wireless communication module 260 in the electronic device 200 are coupled, so that the electronic device 200 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The electronic device 200 implements a display function via a GPU, a display 294, an application processor, and the like. The GPU is a microprocessor for image processing, and is connected to the display 294 and the application processor. The GPU is configured to: perform mathematical and geometric computation, and render an image. The processor 210 may include one or more GPUs that execute program instructions to generate or change display information.

The display 294 is configured to display an image, a video, or the like. The display 294 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), and the like. In some embodiments, the electronic device 200 may include one or N displays 294, where N is a positive integer greater than 1.

The electronic device 200 may implement a photographing function through the ISP, the camera 293, the video codec, the GPU, the display 294, the application processor, and the like.

The ISP is configured to process data fed back by the camera 293. The camera 293 is configured to capture a static image or a video. In some embodiments, the electronic device 200 may include one or N cameras 293, where N is a positive integer greater than 1.

The digital signal processor is configured to process a digital signal, and may further process another digital signal in addition to a digital image signal.

The video codec is configured to: compress or decompress a digital video. The electronic device 200 may support one or more video codecs. In this way, the electronic device 200 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information with reference to a structure of a biological neural network, for example, with reference to a transfer mode between human brain neurons, and may further continuously perform self-learning. Applications such as intelligent cognition of the electronic device 200 may be implemented through the NPU, for example, image recognition, facial recognition, speech recognition, and text understanding.

The interface 220 for external memory may be configured to connect to an external memory card, for example, a micro SD card, to extend a storage capability of the electronic device 200. The external memory card communicates with the processor 210 through the interface 220 for external memory, to implement a data storage function. For example, files such as music and videos are stored in the external storage card.

The internal memory 221 may be configured to store computer-executable program code, and the executable program code includes instructions. The internal memory 221 may include a program storage area and a data storage area. The program storage area may store an operating system, an application required by at least one function (for example, a voice playing function or an image playing function), and the like. The data storage area may store data (for example, audio data or a phone book) created in a process of using the electronic device 200. In addition, the internal memory 221 may include a high-speed random access memory, or may include a nonvolatile memory, for example, at least one magnetic disk storage device, a flash memory, or a universal flash storage (universal flash storage, UFS). The processor 210 runs the instructions stored in the internal memory 221 and/or the instructions stored in the storage disposed in the processor, to perform various function applications of the electronic device 200 and data processing.

The electronic device 200 may implement an audio function, for example, music playing or recording via the audio module 270, the speaker 270A, the receiver 270B, the microphone 270C, the headset jack 270D, the application processor, and the like.

The audio module 270 is configured to convert digital audio information into an analog audio signal output, and is also configured to convert an analog audio input into a digital audio signal. The audio module 270 may be further configured to encode and decode an audio signal.

The button 290 includes a power button, a volume button, and the like. The button 290 may be a mechanical button, or may be a touch button. The electronic device 200 may receive a button input, and generate a button signal input related to a user setting and function control of the electronic device 200.

The motor 291 may generate a vibration prompt. The motor 291 may be configured to provide an incoming call vibration prompt and a touch vibration feedback.

The indicator 292 may be an indicator light, and may be configured to indicate a charging status and a power change, or may be configured to indicate a message, a missed call, a notification, and the like.

The SIM card interface 295 is configured to connect to a SIM card.

A software system of the electronic device 200 may use a layered architecture, an event-driven architecture, a microkernel architecture, a microservice architecture, or a cloud architecture. For example, the software system of the electronic device 200 may use an Android operating system (Operating System, OS), a Harmony operating system (Harmony OS), or an iOS with the layered architecture. In some implementations, the operating system of the electronic device 200 may use the layered architecture.

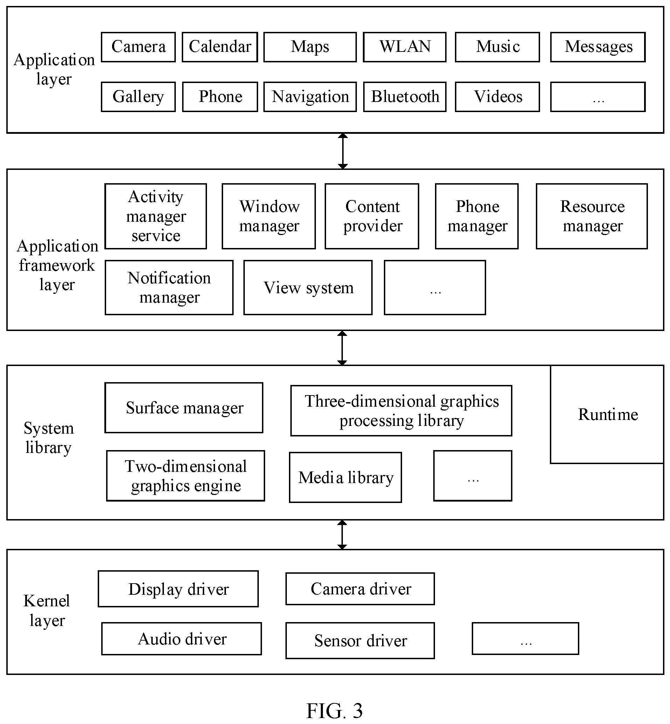

FIG. 3 is a block diagram of the software structure of the electronic device 200 according to an embodiment of this application.

In a layered architecture, software is divided into several layers, and each layer has a clear role and task. The layers communicate with each other through a software interface. In some embodiments, an operating system is divided into four layers: an application layer, an application framework layer, a runtime (runtime) and system library, and a kernel layer from top to bottom.

The application layer may include a series of application packages.

As shown in FIG. 3, an application package may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 3, the application framework layer may include an activity manager service (activity manager service, AMS), a window manager, a content provider, a view system, a phone manager, a resource manager, a notification manager, and the like.

The activity manager service is used to manage an activity (activity), for example, manage a life cycle of the activity. The activity is a component that may include a user interface, and is mainly used to interact with a user, for example, making a call, sending an email, and viewing a map. Most of content that can be viewed by the user in an application is provided by the activity component. An application may include a plurality of activities.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the electronic device 200, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to: notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an alert tone is made, the electronic device vibrates, or the indicator light blinks.

A runtime includes a core library and a virtual machine. The runtime is responsible for scheduling and managing the operating system.

The core library includes two parts: a function that needs to be invoked in Java language, and a core library of the operating system.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

For ease of understanding, the following first describes key technical terms that may be used in embodiments of this application.

Foreground: A state in which an application is being started or operated by a user, or is being displayed. An application in a foreground state may perform some operations that can be noticed by the user.

Background: A state in which an application is still running, but is no longer displayed on a screen, and the user no longer directly operates or pays attention to a status of the application. Generally, the user does not directly notice an operation performed by an application in a background state.

Process (process): The process is execution of an application. One process can be regarded as an independent program. The process is a basic unit for resource allocation and a basic unit for scheduling and execution. For example, when a user runs an application, the system creates a process, and allocates a resource (for example, a CPU resource and/or a GPU resource) to the process. Then, the process is placed in a ready queue of the process. When the process is selected by a scheduler, the system allocates the CPU resource, the GPU resource, and/or the like to the process, so that the process actually runs.

Virtual memory (virtual memory, VA): The virtual memory may also be referred to as a "logical memory". The virtual memory is a memory management technology, which allows the system to provide larger address space than an actual physical memory for each process. The address space may be referred to as virtual address space, and the actual physical memory may be referred to as physical address space. The virtual address space may include one or more virtual addresses. The physical address space may include one or more physical addresses.

Physical memory (physical memory, PA): The physical memory is a random access memory (random access memory, RAM), and is an actual hardware memory of an electronic device, and is configured to store a running program and data. The physical memory of the electronic device may also be referred to as a system memory of the electronic device.

GPU physical memory: The GPU physical memory may also be referred to as a GPU memory, and is a physical memory corresponding to a GPU in an electronic device. The GPU physical memory may be configured to store data related to graphics rendering. To be specific, when a running application is an application on which graphics rendering needs to be performed, the GPU may allocate a corresponding GPU physical memory to the application, and may store, in the GPU physical memory corresponding to the application, graphics rendering-related data corresponding to the application. The GPU physical memory may be a part of the system memory. For example, a GPU physical memory corresponding to an integrated graphics card may be a part of the system memory, that is, the GPU physical memory corresponding to the integrated graphics card occupies a part of the system memory, resulting in a decrease in the system memory. Alternatively, the GPU physical memory may be a physical memory separate from the system memory. For example, a discrete graphics card may have an independent GPU physical memory, that is, the discrete graphics card does not occupy a system memory.

Page (page): In a memory management process, the page is a minimum unit of address space, that is, the page may be a minimum unit of virtual address space and physical address space. Generally, a page is 4 kilobytes (kilobytes, KBs).

Generally, a system may divide both the virtual address space and the physical address space into a plurality of pages (page) of a fixed size, and may maintain a page table (page table) for each process. The page table is used to store a mapping relationship between a virtual page and a physical page in the process. A virtual page may be a page in the virtual address space. A physical page may be a page in the physical address space.

When a virtual address needs to be accessed in a process, the system may determine a virtual page corresponding to the virtual address, search, based on a page table corresponding to the process, for a physical page to which the virtual page is mapped, and determine a physical address corresponding to the physical page to which the virtual page is mapped. In this way, the physical memory can be accessed in the process based on the physical address. The virtual address may include a virtual page number and a virtual page offset. The physical address may include a physical page number and a physical page offset. Therefore, the system may determine the virtual page based on the virtual address, and may determine the physical address based on the physical page.

For a process, not all virtual addresses have corresponding physical pages in the physical memory. When a virtual address accessed in a process does not find a corresponding physical page by searching a page table, or a corresponding physical page is found but the process does not have access permission, a page fault (page fault) occurs.

Page fault (page fault): The page fault is an error that is triggered by a hardware interrupt and that can be corrected by software logic.

The page fault may include a hard page fault (hard page fault), a soft page fault (soft page fault), and an invalid page fault (invalid page fault). The hard page fault may also be referred to as a major page fault (major page fault), and the soft page fault may also be referred to as a minor page fault (minor page fault).

Hard page fault: The hard page fault means that there is no corresponding physical page in a physical memory for a virtual address that needs to be accessed in a process. When the hard page fault occurs, the system may read corresponding data from a disk to a physical memory, that is, may apply for a physical page in the physical memory to save the data, and may establish a mapping relationship between a virtual page corresponding to the virtual address and a physical page, so that when the virtual address is accessed in the process, the virtual address can be mapped to the corresponding physical address, to access the physical memory.

Soft page fault: The soft page fault means that, for a virtual address that needs to be accessed in a process, a corresponding physical page exists in a physical memory, but the physical page may be invoked in another process, and the process of triggering the page fault is unknown. When the soft page fault occurs, the system only needs to establish a mapping relationship between a virtual page corresponding to the virtual address and a physical page, and does not need to read corresponding data from the disk to the physical memory. The soft page fault usually occurs in the shared memory area in a plurality of processes.

Invalid page fault: The invalid page fault means that a physical address accessed in a process is out-of-bounds access or a null pointer reference. In this case, a system may send an exception notification and end the process.

Similarly, the GPU physical memory may be managed by the GPU in the electronic device. For each running application, the GPU may maintain a GPU page table for a corresponding process. A mapping between a virtual page and a GPU physical page (which may also be directly referred to as a physical page) may be saved in the GPU page table. When a virtual address needs to be accessed in a process, the GPU may determine a virtual page corresponding to the virtual address, map the virtual page to a corresponding GPU physical page based on a GPU page table corresponding to the process, and determine a physical address corresponding to the mapped GPU physical page. In this way, the GPU physical memory can be accessed in the process based on the physical address.

However, the GPU does not support the page fault (page fault). In other words, when the GPU physical memory is a part of the system memory, if the GPU physical memory occupied by the application is released when the application is switched to the background, an error occurs when the application is switched to the foreground and accesses the GPU physical memory again. Therefore, when the application is switched to the background, a GPU memory occupied by the application is usually not released. As a quantity of applications used by the user increases, more GPU physical memories are occupied, and remaining available physical memories of the entire system become less. Consequently, the electronic device responds to a user operation more slowly, and user experience is poor.

When the GPU physical memory is the physical memory separate from the system memory, and the application is switched to the background, because the GPU physical memory occupied by the application is usually not released, as a quantity of applications used by the user increases, more GPU physical memories are occupied, remaining available GPU physical memories of the electronic device become less, and a speed at which the GPU performs graphics rendering is reduced. Consequently, the electronic device responds to a user operation more slowly, and user experience is poor.

Embodiments of this application provide a memory management method, so that when an application enters a background state, a GPU physical memory corresponding to the application can be released. When the application is switched to a foreground state, normal use of the application is not affected, and an available physical memory of an entire system can be increased, or an available GPU physical memory of the entire system may be increased, to improve a response speed of the electronic device, improve smoothness of a system, and improve user experience.

In other words, when the GPU physical memory is a part of the system memory, according to the memory management method provided in embodiments of this application, when the application enters the background state, and the GPU physical memory corresponding to the application may be released, to increase remaining available physical memories of the electronic device, improve a response speed of the electronic device, improve smoothness of the system, and improve user experience. When the GPU physical memory is the physical memory separate from the system memory, according to the memory management method provided in embodiments of this application, when the application enters the background state, the GPU physical memory corresponding to the application may be released, to increase an available GPU physical memory of the electronic device, improve a speed at which the electronic device performs graphics rendering, improve a response speed of the electronic device, and improve user experience.

The following uses an example in which the GPU physical memory is a part of the system memory for description.

The following describes in detail the memory management method provided in embodiments of this application with reference to the accompanying drawings and a specific application scenario.

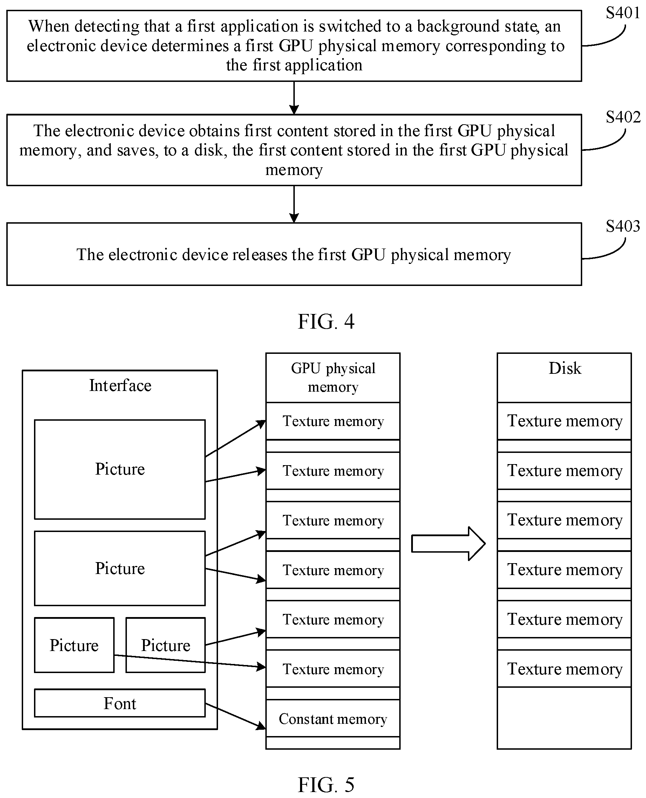

FIG. 4 is a schematic flowchart of a memory management method according to an embodiment of this application. The method may be applied to an electronic device including a GPU, for example, may be applied to an electronic device including a GPU, for example, a mobile phone, a tablet computer, or a notebook computer. As shown in FIG. 4, the method may include the following steps.

S401: When detecting that a first application is switched to a background state, an electronic device determines a first GPU physical memory corresponding to the first application.

S402: The electronic device obtains first content stored in the first GPU physical memory, and saves, to a disk, the first content stored in the first GPU physical memory.

S403: The electronic device releases the first GPU physical memory.

For example, the first application may be any application on which graphics rendering needs to be performed in the electronic device. The first application may be a system application, or may be a third-party application. It should be understood that the system application may be an application provided by a provider of an operating system of the electronic device. The third-party application may be an application provided by a non-provider of the operating system of the electronic device. In other words, the third-party application may be an application provided by another provider (a non-provider of an operating system).

For example, an application market, an SMS message, a camera, and the like that are built (or may be referred to as pre-installed) in the electronic device may be applications provided by a provider of an operating system of the electronic device. In other words, the application market, the SMS message, the camera, and the like that are built in the electronic device may be referred to as system applications. For example, WeChat^{®}, Taobao^{®}, or the like downloaded from the application market to the electronic device may be an application provided by a non-provider of an operating system, that is, WeChat^{®}, Taobao^{®}, or the like downloaded from the application market may be referred to as a third-party application.

For example, when the first application is run in the foreground of the electronic device, a user may perform an input (which may be referred to as a first input below), to switch the first application to the background state. In other words, the first input may be used to switch the first application from the foreground state to the background state. In other words, when the user performs the first input, the first application may be in the foreground state. After detecting the first input performed by the user, the electronic device may switch the first application from the foreground state to the background state.

It should be noted that the first input for switching the first application to the background state is not limited in embodiments of this application, and may be specifically determined based on an actual scenario. For example, the first input may be an input that the user swipes up at a bottom of a display or taps a home button (a virtual button, a floating button, or a physical button) in a display interface to return to a desktop or a home screen. For example, the first input may be an input that the user invokes a multi-task interface in a current interface, for the first application to enter a background state. For example, the user may swipe up at the bottom of the display and pause to invoke the multi-task interface, and may tap a window of another application in the multi-task interface, so that the another application enters a foreground state, and the first application enters a background state.

In some embodiments, the electronic device may detect a status of each application through an activity manager service (activity manager service, AMS). In other words, the electronic device may detect a status of the first application through the AMS. When detecting that the first application is switched to the background state, the AMS may determine that the first application currently does not need to display an image, that is, may determine that the first application currently does not need to perform graphics rendering, so as to determine that the first application currently does not need to use the GPU physical memory. In this case, the AMS may determine that the first application is an application that can release the GPU physical memory according to the memory management method provided in this embodiment of this application. Therefore, the AMS may indicate the GPU to release the first GPU physical memory corresponding to the first application, to reclaim the first GPU physical memory corresponding to the first application, so as to increase remaining available physical memories of the electronic device.

For example, the AMS may send information (which may be referred to as first information below) to the GPU, to notify, based on the first information, the GPU that the first application is switched to the background, and the first GPU physical memory corresponding to the first application may be released. After obtaining the first information, the GPU may determine, according to S401 to S403, the first GPU physical memory corresponding to the first application, may obtain the first content stored in the first GPU physical memory, may save the first content to the disk, and may release the first GPU physical memory.

For example, the AMS may send the first information to the GPU in an input/output control (input/output control, ioctl) interface. ioctl is an interface for managing an I/O channel of the electronic device in a device driver. Managing the I/O channel may be controlling some features of the electronic device. It should be understood that, for content, a use manner, and the like of the ioctl interface, refer to the conventional technology. This is not limited in embodiments of this application.

It should be understood that releasing the first GPU physical memory corresponding to the first application may be releasing all GPU physical memories occupied by the first application, or may be releasing a part of GPU physical memories occupied by the first application. For example, as shown in FIG. 5, an interface of the first application may include a picture and a text. To be specific, the GPU physical memories occupied by the first application may include a texture memory occupied by picture data, or may include a constant memory occupied by data such as a text and a font. The texture memory occupied by the picture data is usually large, and is greater than the constant memory occupied by data such as a text and a font. Releasing the first GPU physical memory corresponding to the first application may be releasing the texture memory occupied by the picture data. That is, as shown in FIG. 5, content stored in the texture memory may be saved to the disk, and the texture memory may be released.

In some other embodiments, when the electronic device detects that the first application is switched to the foreground state, the AMS may indicate the GPU to rebuild a GPU physical memory (which may be referred to as a second GPU physical memory below) corresponding to the first application. For example, the AMS may send information (which may be referred to as second information below) to the GPU, to notify, based on the second information, the GPU that the first application is switched to the foreground, and the GPU physical memory needs to be rebuilt for the first application. After obtaining the second information, the GPU may reallocate the second GPU physical memory to the first application. After the second GPU physical memory is allocated, the electronic device may obtain the first content previously saved to the disk, may fill the reallocated second GPU physical memory with the first content, and may establish a mapping relationship between the second GPU physical memory and virtual address space corresponding to the first application. In this way, when the first application is switched back to the foreground state, the first application can normally display an image without modifying a virtual address corresponding to the first application.

It should be noted that the foregoing detecting the status of each application through the AMS is merely an example for explanation, and should not be construed as a limitation on embodiments of this application. In this embodiment of this application, the electronic device may alternatively detect the status of each application through another service. A specific manner in which the electronic device detects the status of each application may be determined based on an actual scenario.

It should be understood that, after the first GPU physical memory corresponding to the first application is released, if the first application is cleared by the operating system according to a memory clearing mechanism, for example, is cleared according to a memory clearing mechanism (low memory killer, LMK) preset by the operating system, or is manually cleared by the user in the multi-task interface, before the first application is cold started next time, the first application is not switched to the foreground state. In this case, the electronic device may not need to rebuild the second GPU physical memory corresponding to the first application.

For example, when the first application is switched to the background state, the user may perform an input (which may be referred to as a second input below), to switch the first application to the foreground state. In other words, the second input may be used to switch the first application from the background state to the foreground state. In other words, when the user performs the second input, the first application may be in the background state. After detecting the second input performed by the user, the electronic device may switch the first application from the background state to the foreground state.

It should be noted that the second input for switching the first application to the foreground state is not limited in embodiments of this application, and may be specifically determined based on an actual scenario. For example, the second input may be that the user slides up at the bottom of the display and pauses to invoke the multi-task interface, and may tap the window of the second application in the multi-task interface, so that the second application enters the foreground state.

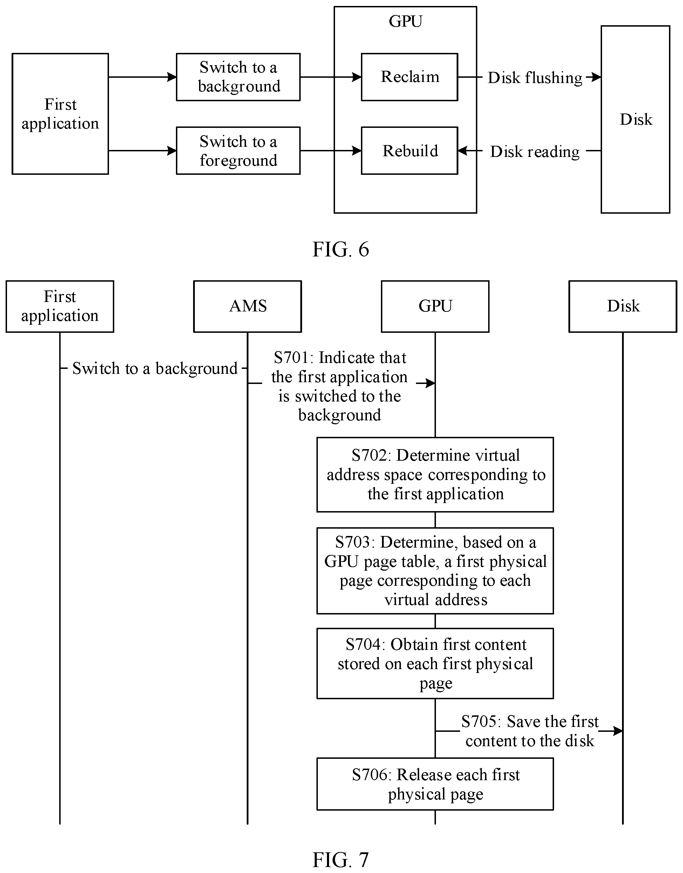

FIG. 6 is a diagram of releasing a GPU physical memory and rebuilding a GPU physical memory according to this embodiment of this application.

As shown in FIG. 6, according to the foregoing steps, when the first application is switched to the background, does not need to display an image, and does not need to use the GPU physical memory, the electronic device may store, in a disk, content saved in the first GPU physical memory (which may be represented as disk flushing in FIG. 6), and may reclaim the first GPU physical memory corresponding to the first application, to increase an available physical memory of an entire system and improve smoothness of the system. When the first application is switched to the foreground state again, the electronic device may reallocate the second GPU physical memory to the first application, and may load the first content previously saved to the disk to the reallocated second GPU physical memory (which may be represented as disk reading in FIG. 6), so that normal use of the first application may not be affected, and the virtual address of the first application does not change in the entire process.

In other words, in this embodiment of this application, the GPU physical memory may be released without modifying the virtual address of the first application and without awareness of the first application, to increase remaining available physical memories of the electronic device, thereby improving smoothness of the system. In addition, when the first application is switched to the foreground state, an image may be also accurately displayed, and normal use of the first application is not affected.

The following describes in detail a process in which the electronic device releases the GPU physical memory.

FIG. 7 is a schematic flowchart of a method for releasing a GPU physical memory according to an embodiment of this application. The diagram is described by using an example in which an electronic device detects a status of a first application through an AMS. As shown in FIG. 7, the method may include the following steps.

S701: When detecting that the first application is switched to a background state, the AMS notifies a GPU that the first application is switched to a background.

In this embodiment of this application, the AMS in the electronic device may detect the status of the first application in real time. When detecting that the first application is started to run, that is, detecting that the first application enters a foreground state, but the first application is not switched from the background state to the foreground state, the AMS may determine that the GPU physical memory needs to be allocated to the first application.

The GPU physical memory in the electronic device is managed by the GPU in the electronic device, that is, release, allocation, or the like of the GPU physical memory is performed by the GPU. Therefore, when detecting that the first application is started to run, the AMS may send information (which may be referred to as third information below) to the GPU. The third information may be used to notify the GPU that the first application is started to run and the GPU physical memory needs to be allocated to the first application. After obtaining the third information, the GPU may allocate a corresponding GPU physical memory (for example, a first GPU physical memory) to the first application.

When the first application runs, the AMS may continue to detect the status of the first application. When detecting that the first application is switched from the foreground state to the background state, the AMS may determine that the first application does not need to use the GPU physical memory currently, that is, may determine that the first GPU physical memory corresponding to the first application may be released. In this case, the AMS may notify the GPU that the first application is switched to the background, and the first GPU physical memory corresponding to the first application may be released.

For example, the AMS may send first information to the GPU through an ioctl interface. The first information may be used to notify the GPU that the first application is switched to the background, and the first GPU physical memory corresponding to the first application may be released.

S702: The GPU determines virtual address space corresponding to the first application.

It should be understood that, for an application that is started to run in the electronic device, an operating system of the electronic device may allocate corresponding virtual address space to the application. When the application is an application on which graphics rendering needs to be performed, the GPU may obtain and save virtual address space corresponding to the application. In other words, for an application on which graphics rendering needs to be performed, when the application runs, the GPU may store a correspondence (which may be referred to as a correspondence A below) between the application and virtual address space corresponding to the application.

Therefore, after obtaining the first information, the GPU may determine, based on the correspondence A, the virtual address space corresponding to the first application, and may determine, based on the virtual address space corresponding to the first application, the first GPU physical memory corresponding to the first application, to release the first GPU physical memory.

It should be noted that the virtual address space may include at least one virtual address. Generally, the virtual address space may include a plurality of virtual addresses. The virtual address may include a virtual page number and a virtual page offset. In other words, the virtual address space may be divided into a plurality of virtual pages of a fixed size. Each virtual page may have a corresponding virtual address. In other words, each virtual address may point to a corresponding virtual page.

Similarly, the physical address space (for example, the GPU physical memory) may include at least one physical address. Generally, the GPU physical memory may include a plurality of physical addresses. The physical address may include a physical page number and a physical page offset. In other words, the GPU physical memory may be divided into a plurality of GPU physical pages (or physical pages) of a fixed size. Each physical page may have a corresponding physical address. In other words, each physical address may point to a corresponding physical page.

A size of the physical page is usually the same as a size of the virtual page. For example, both the size of the physical page and the size of the virtual page may be 4 KB.

S703: The GPU determines, based on a GPU page table, a first physical page corresponding to each virtual address.

In this embodiment of this application, for a running application on which graphics rendering needs to be performed, the GPU may maintain a GPU page table corresponding to the application, and the GPU page table may include a mapping relationship between a virtual page and a physical page that correspond to the application. Therefore, after determining each virtual address corresponding to the first application, the GPU may determine, based on each virtual address and a GPU page table that corresponds to the first application, a physical page (that is, a first physical page) corresponding to each virtual address, that is, determine the first GPU physical memory corresponding to the first application.

For example, for each virtual address corresponding to the first application, the GPU may determine, based on the virtual address, a virtual page number corresponding to the virtual address, to determine a virtual page corresponding to the virtual address. After determining the virtual page corresponding to each virtual address, the GPU may determine, based on the virtual page corresponding to each virtual address and the GPU page table corresponding to the first application, the first physical page corresponding to each virtual address.

S704: The GPU obtains first content stored on each first physical page.

S705: The GPU saves, to a disk, the first content stored on each first physical page.

S706: The GPU releases each first physical page corresponding to the first application.

In some embodiments, after determining the first physical page corresponding to each virtual address of the first application, the GPU may obtain content (that is, the first content) stored on each first physical page. Subsequently, the GPU may separately save, to the disk, the first content stored on each first physical page, release each first physical page corresponding to the first application, and delete the GPU page table corresponding to the first application, to remove a mapping relationship between the virtual page and the first physical page that correspond to the first application, and to reclaim the first GPU physical memory corresponding to the first application, that is, to reclaim all GPU physical memories occupied by the first application.

In some other embodiments, after determining the first physical page corresponding to each virtual address of the first application, the GPU may obtain the first content stored on each first physical page. Subsequently, the GPU may determine, based on the first content stored on each first physical page, a target physical page that needs to be released. For example, the GPU may determine, based on the first content stored on each first physical page, a first physical page that stores picture data, and may determine the first physical page that stores the picture data as the target physical page that needs to be released. After determining the target physical page, the GPU may separately save, to the disk, the first content stored on each target physical page, and may release each target physical page and delete a mapping relationship between each target physical page and a virtual page, to reclaim a part of GPU physical memories occupied by the first application.

In a possible implementation, when saving, to the disk, the first content stored on each first physical page, the GPU may record, based on a mapping relationship (that is, the GPU page table corresponding to the first application) between each first physical page and a virtual page, a correspondence (which may be referred to as a correspondence B below) between each piece of first content and a virtual page. After rebuilding a second GPU physical memory corresponding to the first application, the GPU may obtain each piece of first content from the disk, and may fill a second physical page in the second GPU physical memory with each piece of first content. Subsequently, the GPU may establish a mapping relationship between a virtual page and a second physical page based on the first content filled in each second physical page and the correspondence B between the first content and the virtual page, to rebuild a GPU page table corresponding to the first application, so that when the first application is switched to the foreground state, the virtual address of the first application may be mapped to a correct physical page based on the rebuilt GPU page table without modifying the virtual address of the first application. In this way, the first application can normally access the GPU physical memory, and the first application can be normally used, that is, the first application can correctly display an image.

For example, when the first GPU physical memory includes a first physical page A1, a first physical page A2, a first physical page A3, and a first physical page A4, the virtual page includes a virtual page B1, a virtual page B2, a virtual page B3, and a virtual page B4, the first physical page A1 may be mapped to the virtual page B4, the first physical page A2 may be mapped to the virtual page B3, the first physical page A3 may be mapped to the virtual page B2, and the first physical page A4 may be mapped to the virtual page B1; and when saving, to the disk, first content (for example, first content A1) stored on the first physical page A1, the GPU may record a correspondence between the first content A1 and the virtual page B4. When saving, to the disk, first content (for example, first content A2) stored on the first physical page A2, the GPU may record a correspondence between the first content A2 and the virtual page B3. When saving, to the disk, first content (for example, first content A3) stored on the first physical page A3, the GPU may record a correspondence between the first content A3 and the virtual page B2. When saving, to the disk, first content (for example, first content A4) stored on the first physical page A4, the GPU may record a correspondence between the first content A4 and the virtual page B1.

After rebuilding the second GPU physical memory corresponding to the first application, the GPU may obtain each piece of first content from the disk, that is, may obtain the first content A1, the first content A2, the first content A3, and the first content A4, and the first content A1, the first content A2, the first content A3, and the first content A4 may be separately filled in a second physical page in the second GPU physical memory, for example, the second GPU physical memory may include a second physical page C1, a second physical page C2, a second physical page C3, and a second physical page C4. The GPU may fill the second physical page C4 with the first content A1, fill the second physical page C3 with the first content A2, fill the second physical page C2 with the first content A3, and fill the second physical page C1 with the first content A4.

Subsequently, the GPU may establish a mapping relationship between the virtual page and the second physical page based on the first content filled in each second physical page and the correspondence B between the first content and the virtual page, to rebuild a GPU page table corresponding to the first application. For example, the rebuilt GPU page table may include that the virtual page B1 is mapped to the second physical page C1, the virtual page B2 is mapped to the second physical page C2, the virtual page B3 is mapped to the second physical page C3, and the virtual page B4 is mapped to the second physical page C4.

In another possible implementation, the mapping relationship between the virtual page and the physical page that correspond to the first application may be sequential mapping. To be specific, the first virtual page may be mapped to the first physical page, the second virtual page may be mapped to the second physical page, the third virtual page may be mapped to the third physical page, and the like. When saving, to the disk, the first content stored on each first physical page, the GPU may record a storage location of each piece of first content in the first GPU physical memory, that is, may record a physical page, in the first GPU physical memory, to which each piece of first content belongs. After rebuilding the second GPU physical memory corresponding to the first application, the GPU may fill, based on the storage location of each piece of first content in the first GPU physical memory, a second physical page at a corresponding location in the second GPU physical memory with each piece of first content. Subsequently, the GPU may establish the mapping relationship between the virtual page and the second physical page based on the sequential mapping to rebuild the GPU page table corresponding to the first application, so that when the first application is switched to the foreground state, the virtual address of the first application may be mapped to a correct physical page based on the rebuilt GPU page table without modifying the virtual address of the first application. In this way, the first application can normally access the GPU physical memory, and the first application can be normally used, that is, the first application can correctly display an image.

For example, when the first GPU physical memory sequentially includes a first physical page A1, a first physical page A2, a first physical page A3, and a first physical page A4, and the virtual page sequentially includes a virtual page B1, a virtual page B2, a virtual page B3, and a virtual page B4, it may be determined, based on the sequential mapping, that the first physical page A1 is mapped to the virtual page B1, the first physical page A2 is mapped to the virtual page B2, the first physical page A3 is mapped to the virtual page B3, and the first physical page A4 is mapped to the virtual page B4.

When saving, to the disk, first content A1 stored on the first physical page A1, the GPU may record that a storage location of the first content A1 in the first GPU physical memory is a first physical page. When saving, to the disk, first content A2 stored on the first physical page A2, the GPU may record that a storage location of the first content A2 in the first GPU physical memory is a second physical page. When saving, to the disk, first content A3 stored on the first physical page A3, the GPU may record that a storage location of the first content A3 in the first GPU physical memory is a third physical page. When saving, to the disk, first content A4 stored on the first physical page A4, the GPU may record that a storage location of the first content A4 in the first GPU physical memory is a fourth physical page.

After rebuilding the second GPU physical memory corresponding to the first application, the GPU may fill, based on the storage location of each piece of first content in the first GPU physical memory, a second physical page at a corresponding location in the second GPU physical memory with each piece of first content. For example, when the second GPU physical memory may sequentially include a second physical page C1, a second physical page C2, a second physical page C3, and a second physical page C4, the GPU may fill the second physical page C1 with the first content A1, fill the second physical page C2 with the first content A2, fill the second physical page C3 with the first content A3, and fill the second physical page C4 with the first content A4.

Subsequently, the GPU may establish a mapping relationship between the virtual page and the second physical page based on sequential mapping to rebuild the GPU page table corresponding to the first application. For example, the rebuilt GPU page table may include that the virtual page B1 is mapped to the second physical page C1, the virtual page B2 is mapped to the second physical page C2, the virtual page B3 is mapped to the second physical page C3, and the virtual page B4 is mapped to the second physical page C4.

The following describes in detail a process in which an electronic device rebuilds a GPU physical memory.

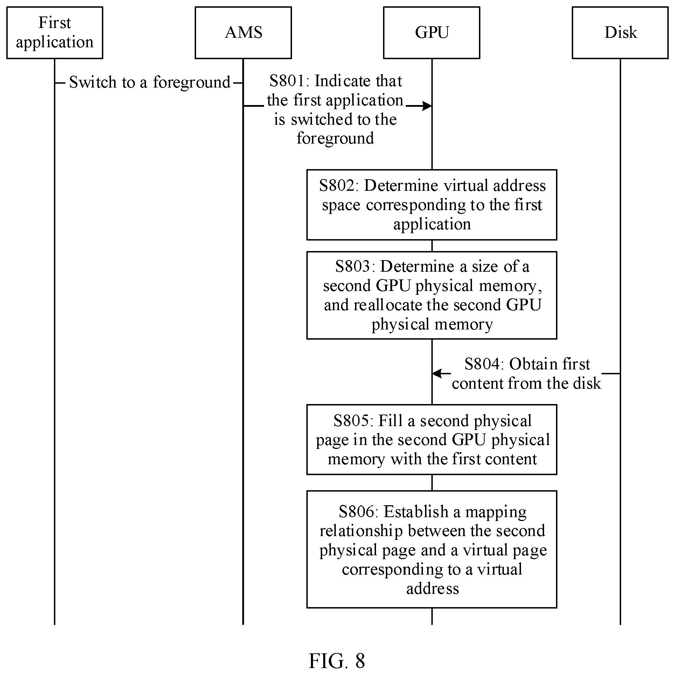

FIG. 8 is a schematic flowchart of rebuilding a GPU physical memory according to an embodiment of this application. The diagram is described by using an example in which an electronic device detects a status of a first application through an AMS. As shown in FIG. 8, a process of rebuilding the GPU physical memory may include the following steps.

S801: When detecting that the first application is switched to a foreground state, the AMS notifies a GPU that the first application is switched to a foreground.

When the first application is switched to a background state, the AMS may continue to detect the status of the first application. When detecting that the first application is switched from the background state to the foreground state, the AMS may determine that the first application currently needs to use the GPU physical memory, that is, may determine that the GPU physical memory corresponding to the first application needs to be rebuilt. In this case, the AMS may notify the GPU that the first application is switched to the foreground, and the GPU physical memory corresponding to the first application needs to be rebuilt.

For example, the AMS may send second information to the GPU through an ioctl interface. The second information may be used to notify the GPU that the first application is switched to the foreground and the GPU physical memory corresponding to the first application needs to be rebuilt.

S802: The GPU determines virtual address space corresponding to the first application.

It should be understood that, for specific content that the GPU determines the virtual address space corresponding to the first application, refer to related descriptions in S702 in which the GPU determines the virtual address space corresponding to the first application. Details are not described herein again.

S803: The GPU determines a size of a second GPU physical memory corresponding to the first application, and reallocates, based on the size of the second GPU physical memory, the second GPU physical memory to the first application.

In some embodiments, when saving, to the disk, first content stored in a first GPU physical memory, the GPU may record a size of a memory occupied by the first content. When rebuilding the second GPU physical memory corresponding to the first application, the GPU may determine the size of the second GPU physical memory based on the size of the memory occupied by the first content.

In some other embodiments, when rebuilding the second GPU physical memory corresponding to the first application, the GPU may read the first content that corresponds to the first application and that is saved to the disk, and may determine the size of the memory occupied by the first content, to determine the size of the second GPU physical memory based on the size of the memory occupied by the first content.

For example, the GPU may determine that the size of the second GPU physical memory is the same as the size of the memory occupied by the first content.

For example, the GPU may determine that the size of the second GPU physical memory is greater than the size of the memory occupied by the first content.

In some other embodiments, when releasing the first GPU physical memory, the GPU may record a size of the first GPU physical memory, and may determine the size of the second GPU physical memory based on the size of the first GPU physical memory. For example, the GPU may determine that the size of the second GPU physical memory is the same as the size of the first GPU physical memory. For example, it may be determined that the size of the second GPU physical memory is greater than the size of the first GPU physical memory.

It should be understood that the second GPU physical memory may include at least one physical page (that is, a second physical page). A quantity of second physical pages included in the second GPU physical memory may be determined based on the size of the second GPU physical memory and a size of the second physical page. The size of the second physical page may be the same as a size of a first physical page. For example, the size of the second physical page may be 4 KB, and the size of the second GPU physical memory may be an integer multiple of 4 KB.

S804: The GPU obtains the first content from the disk.

S805: The GPU fills the second physical page in the second GPU physical memory with the first content.

S806: The GPU establishes a mapping relationship between the second physical page and a virtual page corresponding to a virtual address.

In this embodiment of this application, after the second GPU physical memory is allocated to the first application, the GPU may obtain the previously saved first content from the disk, that is, may obtain the first content corresponding to each first physical page. Subsequently, the GPU may fill the second physical page in the second GPU physical memory with the first content corresponding to each first physical page, and may rebuild a mapping relationship between the second physical page and the virtual page corresponding to the first application, that is, rebuild a GPU page table corresponding to the first application. In this way, the first application can accurately access the GPU physical memory based on the rebuilt GPU page table and the virtual address corresponding to the first application, and the first application can be normally used, that is, the first application can correctly display an image.

In a possible implementation, when saving, to the disk, the first content stored on each first physical page, the GPU may record, based on a mapping relationship (that is, the GPU page table corresponding to the first application) between each first physical page and a virtual page, a correspondence B between each piece of first content and a virtual page. Therefore, after rebuilding the second GPU physical memory corresponding to the first application, the GPU may obtain each piece of first content from the disk, and may fill the second physical page in the second GPU physical memory with each piece of first content. Subsequently, the GPU may establish a mapping relationship between a virtual page and a second physical page based on the first content filled in each second physical page and the correspondence B between the first content and the virtual page, to rebuild the GPU page table corresponding to the first application, so that when the first application is switched to the foreground state, the virtual address of the first application may be mapped to a correct physical page based on the rebuilt GPU page table without modifying the virtual address of the first application. In this way, the first application can normally access the GPU physical memory, and the first application can be normally used, that is, the first application can correctly display an image.

In another possible implementation, the mapping relationship between the virtual page and the physical page that correspond to the first application may be sequential mapping. To be specific, the first virtual page may be mapped to the first physical page, the second virtual page may be mapped to the second physical page, the third virtual page may be mapped to the third physical page, and the like. When saving, to the disk, the first content stored on each first physical page, the GPU may record a storage location of each piece of first content in the first GPU physical memory, that is, may record a physical page, in the first GPU physical memory, to which each piece of first content belongs. Therefore, after rebuilding the second GPU physical memory corresponding to the first application, the GPU may fill, based on the storage location of each piece of first content in the first GPU physical memory, a second physical page at a corresponding location in the second GPU physical memory with each piece of first content. Subsequently, the GPU may establish the mapping relationship between the virtual page and the second physical page based on the sequential mapping to rebuild the GPU page table corresponding to the first application, so that when the first application is switched to the foreground state, the virtual address of the first application may be mapped to a correct physical page based on the rebuilt GPU page table without modifying the virtual address of the first application. In this way, the first application can normally access the GPU physical memory, and the first application can be normally used, that is, the first application can correctly display an image.

It should be understood that sequence numbers of the steps do not mean execution sequences in the foregoing embodiments. The execution sequences of the processes should be determined based on functions and internal logic of the processes, and should not be construed as any limitation on the implementation processes of embodiments of this application.

Corresponding to the memory management method described in the foregoing embodiment, an embodiment of this application further provides a memory management apparatus. Modules of the apparatus may correspondingly implement steps of the memory management method.

It should be noted that content such as information exchange between the foregoing apparatuses/units and the execution processes thereof is based on a same concept as the method embodiments of this application. For specific functions and technical effect of the content, refer to the method embodiments. Details are not described herein again.

A person skilled in the art may clearly understand that, for the purpose of convenient and brief description, division into the foregoing functional units and modules is merely used as an example for description. In an actual application, the foregoing functions may be allocated to different functional units and modules for implementation based on a requirement. In other words, an inner structure of the apparatus is divided into different functional units or modules, to implement all or some of the functions described above. Functional units or modules in embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units or modules are merely for ease of distinguishing between the functional units or modules, but are not intended to limit the protection scope of this application. For a specific working process of the units or modules in the foregoing system, refer to a corresponding process in the foregoing method embodiments. Details are not described herein again.

An embodiment of this application further provides an electronic device. The electronic device includes at least one storage, at least one processor, and a computer program that is stored in the at least one storage and that can be run on the at least one processor. The processor may include a GPU. When the computer program is executed by the processor, the electronic device is enabled to implement the steps in any one of the foregoing memory management method embodiments. For example, a structure of the electronic device may be shown in FIG. 2.

An embodiment of this application further provides a computer-readable storage medium. The computer-readable storage medium stores a computer program. When the computer program is executed by a computer, the computer is enabled to implement the steps in any one of the foregoing memory management method embodiments.

An embodiment of this application provides a computer program product. When the computer program product runs on an electronic device, the electronic device is enabled to implement the steps in any one of the foregoing memory management method embodiments.

When the integrated unit is implemented in the form of the software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the method embodiments can be implemented. The computer program includes computer program code, and the computer program code may be in a source code form, an object code form, an executable file, an intermediate form, or the like. The computer-readable storage medium may include at least any entity or apparatus that can carry the computer program code to an apparatus/electronic device, a recording medium, a computer memory, a read-only memory (read-only memory, ROM), a random access memory (random access memory, RAM), an electrical carrier signal, a telecommunication signal, and a software distribution medium, for example, a USB flash drive, a removable hard disk, a disk, or an optical disk.

In the foregoing embodiments, descriptions of each embodiment have respective focuses. For a part that is not described in detail or recorded in an embodiment, refer to related descriptions in another embodiment.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

In embodiments provided in this application, it should be understood that the disclosed apparatus/electronic device and method may be implemented in other manners. For example, the described apparatus/electronic device embodiment is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, and may be located at one location, or may be distributed on a plurality of network units. A part or all of the units may be selected based on actual requirements to achieve the objectives of the solutions in embodiments.

The foregoing embodiments are merely intended to describe the technical solutions of this application, but are not to limit this application. Although this application is described in detail with reference to the foregoing embodiments, a person of ordinary skill in the art should understand that modifications may still be made to the technical solutions described in the foregoing embodiments or equivalent replacements may be made to some technical features thereof, without departing from the spirit and scope of the technical solutions of embodiments of this application, and these modifications and replacements shall fall within the protection scope of this application.

## Claims

1. A GPU memory management method, applied to an electronic device, wherein the method comprises:
when it is detected that a first application is switched to a background state, saving, to a disk, first content stored in a first GPU physical memory corresponding to the first application; and
releasing the first GPU physical memory, wherein
releasing the first GPU physical memory comprises:
releasing a first physical page of the first GPU physical memory; and
deleting a first mapping relationship between the first physical page and a first virtual page corresponding to the first application.

2. The method according to claim 1, wherein when it is detected that the first application is switched to the background state, saving, to the disk, the first content stored in the first GPU physical memory corresponding to the first application comprises:
when it is detected that the first application is switched to the background state and graphics rendering is not performed on the first application, saving, to the disk, the first content stored in the first GPU physical memory corresponding to the first application.

3. The method according to claim 1 or 2, wherein the method further comprises:
when it is detected that the first application is switched to a foreground state, reallocating a second GPU physical memory to the first application.

4. The method according to claim 3, wherein the method further comprises:
establishing a second mapping relationship between the first virtual page and a second physical page of the second GPU physical memory.

5. The method according to claim 4, wherein establishing the second mapping relationship between the first virtual page and the second physical page comprises:
determining the first virtual page based on a third mapping relationship, wherein the third mapping relationship is a correspondence between the first content and the first virtual page; and
establishing the second mapping relationship between the first virtual page and the second physical page.

6. The method according to claim 2, wherein the first GPU physical memory comprises a texture memory of the first application or a constant memory of the first application.

7. The method according to any one of claims 1 and 2 or claims 4 to 6, wherein the first physical page comprises the first content.

8. The method according to claim 1 or 2, wherein the electronic device comprises a first GPU page table, and the first GPU page table stores the first mapping relationship.

9. The method according to claim 1 or 2, wherein before saving, to the disk, the first content stored in the first GPU physical memory corresponding to the first application, the method further comprises:
determining virtual address space corresponding to the first application; and
determining the first GPU physical memory based on the virtual address space.

10. The method according to claim 9, wherein determining the first GPU physical memory based on the virtual address space comprises:
determining the first physical page based on the first virtual page and the first mapping relationship.

11. The method according to claim 5, wherein saving, to the disk, the first content stored in the first GPU physical memory comprises:
saving, to the disk, the first content stored in the first GPU physical memory, and recording the third mapping relationship between the first content and the first virtual page.

12. The method according to claim 4 or 5, wherein after reallocating the second GPU physical memory to the first application, the method further comprises:
obtaining the first content from the disk, and filling the second GPU physical memory with the first content.

13. The method according to claim 12, wherein obtaining the first content from the disk, and filling the second GPU physical memory with the first content comprises:
obtaining the first content from the disk, and filling the second physical page comprised in the second GPU physical memory with the first content.

14. An electronic device, comprising a storage, a processor, and a computer program that is stored in the storage and that can be run on the processor, wherein when the processor executes the computer program, the electronic device is enabled to implement the GPU memory management method according to any one of claims 1 to 13.

15. A computer-readable storage medium, wherein the computer-readable storage medium stores a computer program, and when the computer program is executed by a computer, the computer is enabled to implement the GPU memory management method according to any one of claims 1 to 13.
